Europäisches Patentamt

European Patent Office

Office européen des brevets

(19)

(11) Veröffentlichungsnummer: **0 279 923 B1**

(12) # EUROPÄISCHE PATENTSCHRIFT

(45) Veröffentlichungstag der Patentschrift: **17.06.92**

(51) Int. Cl.⁵: **A01J 15/12**

(21) Anmeldenummer: **87117724.2**

(22) Anmeldetag: **01.12.87**

(54) Verfahren und Vorrichtung zum Herstellen von Butter.

(30) Priorität: **21.02.87 DE 3705643**

(43) Veröffentlichungstag der Anmeldung:
**31.08.88 Patentblatt 88/35**

(45) Bekanntmachung des Hinweises auf die
Patenterteilung:
**17.06.92 Patentblatt 92/25**

(84) Benannte Vertragsstaaten:
**CH ES FR GB LI NL**

(56) Entgegenhaltungen:
**EP-A- 0 186 795**
**DE-C- 762 205**
**DE-C- 815 721**
**DE-C- 3 426 280**
**US-A- 2 729 563**

**DEUTSCHE MOLKEREI-ZEITUNG - DMZ. vol.
107, no. 29, Juli 1986, MUNCHEN DE Seiten
958 - 964; H.Lehmann: "Technologie und Einrichtung für die Butterei"**

**VOEDINGSMIDDELEN TECHNOLOGIE. vol. 19,
no. 5, März 1986, ZEIST NL Seiten 35 - 38;
E.de Jong,G.van den Berg: "Het gebruik van
een homogeniseerapparaat (Mikrofix) bij het
ompakken van boter"**

(73) Patentinhaber: **Westfalia Separator AG
Werner-Habig-Strasse 1 Postfach 3720
W-4740 Oelde 1(DE)**

(72) Erfinder: **Lehmann, Hanno R.
Lortzingstr. 16
W-4740 Oelde 1(DE)**
Erfinder: **Uphus,Arnold
Dechant-Kersting-Str. 11
4740 Oelde 3 Lette(DE)**
Erfinder: **Kreimer,Johannes
Auf der Brede 21
W-4740 Oelde 1(DE)**

(74) Vertreter: **Stracke, Alexander, Dipl.-Ing. et al
Jöllenbecker Strasse 164
W-4800 Bielefeld 1(DE)**

EP 0 279 923 B1

## Beschreibung

Die vorliegende Erfindung bezieht sich auf ein Verfahren zum Herstellen von Butter mittels einer kontinuierlich arbeitenden Butterungsmaschine, die mindestens einen Butterungszylinder, einen Buttermilchabzug und einen Abpresser aufweist. Die Erfindung betrifft außerdem eine Vorrichtung zur Durchführung des Verfahrens.

Bei kontinuierlich arbeitenden Butterungsmaschinen der genannten Art ("Deutsche Molkereizeitung - DMZ", vol. 107, no. 29, Juli 1986, Seiten 958-964; H. Lehmann: "Technologie und Einrichtung für die Butterei") wird über den Abpresser ein gleichbleibender Volumenstrom der erzeugten Butter gefördert.

Es ist ferner ein Verfahren bekannt (US-A-2 729 563), bei dem hochkonzentriertem Rahm Butter zugegeben wird. Diese Butter wirkt bekanntermaßen als Katalysator bei der Phasenumkehr. Eine Beeinflussung der Butterqualität kann dadurch nicht erreicht werden.

Butter wird bekanntlich aus aus Milch gewonnenem Rahm hergestellt. Die Zusammensetzung des Rahms ist von mehreren Faktoren, wie z.B. von der den Kühen gegebenen Futterart, dem Klima, der Rasse der Kühe abhängig. Durch die sich ändernde Zusammensetzung des Rahms ändert sich auch die Konsistenz bzw. Struktur der Butter. Von seiten der Verbraucher besteht allerdings die Forderung nach einer gleichbleibenden Qualität. Dazu könnte Frischrahm mit Lagerrahm in einem bestimmten Verhältnis gemischt werden. Dabei ist jedoch nachteilig, daß Frisch- und Lagerrahm vor Beginn der Rahmreifung zusammengeführt werden müssen. Daraus ergibt sich, daß das Zusammenführen des Rahms für die jeweilige Butterqualität zeitlich in einem großen Abstand vor dem Herstellen der Butter erfolgen muß. Außerdem sind für die Bevorratung von gelagertem Rahm relativ große Lagerkapazitäten und ein besonders hoher Einsatz an Energie zum Auftauen und zum Kühlen notwendig. Es ist daher wirtschaftlicher, Frischbutter mit Lagerbutter oder Reinfett zu vermischen. Außerdem ist die größere Flexibilität in der Steuerung der Produktionsabläufe vorteilhaft, weil bei der Verwendung von Rahm die Zeit für die Rahmreifung zusätzlich zu berücksichtigen ist.

Der vorliegenden Erfindung liegt demzufolge die Aufgabe zugrunde, ein Verfahren der eingangs genannten Art zu entwickeln, mit dem in besonders wirtschaftlicher Weise Frischbutter mit Lagerbutter oder Reinfett mischbar ist, wobei in dem hergestellten Endprodukt eine gleichmäßige Verteilung der Ausgangsprodukte gewährleistet ist.

Der Erfindung liegt außerdem die Aufgabe zugrunde, eine Vorrichtung zur Durchführung des erfindungsgemäßen Verfahrens zu schaffen, welche einfach aufgebaut ist, störungsfrei arbeitet und so gestaltet ist, daß die Vorrichtung als Zusatzgerät für eine kontinuierlich arbeitende Butterungsmaschine zu sehen ist, wobei zur Herstellung des Endproduktes keine manuell durchzuführenden Arbeitsgänge notwendig sind.

Die gestellte Aufgabe bezüglich des Verfahrens wird durch die im Kennzeichen des Anspruches 1 aufgeführten Merkmale gelöst.

In der nachfolgenden Beschreibung werden der Einfachheit halber unter Butterstückchen auch Fettstückchen verstanden.

Da die mit Frischbutter zu vermischende Lagerbutter in Form von Butterstückchen zugeführt wird, ist die Voraussetzung für eine innige Vermischung gegeben, so daß man davon ausgehen kann, daß eine gleichmäßige Verteilung der Butterstückchen erfolgt und somit ein homogenes Endprodukt hergestellt wird. Nach dem Abziehen des größten Gehaltes an Buttermilch befindet sich die Frischbutter noch im Zustand eines lockeren Gebildes. Da im nachgeschalteten Abpresser eine Verdichtung erfolgt, werden die zugeführten Butterstückchen äußerst fein verteilt, wenn deren Zuführung in das Butterkorn erfolgt.

Da bei bei dem erfindungsgemäßen Verfahren der Frischbutter Lagerbutter zugesetzt wird, ist die benötigte Lagerkapazität wesentlich geringer, bedingt durch die höhere Dichte von Butter gegenüber Rahm. Zum Kühlen von kleineren Lagerräumen wird auch eine geringere Menge Energie benötigt.

In Weiterbildung des Verfahrens ist vorgesehen, daß die Zugabe der Butterstückchen in einem regelbaren, kontinuierlichen Mengenstrom erfolgt. Dadurch ist sichergestellt, daß das zur Erzielung einer gleichbleibenden Qualität notwendige Mischungsverhältnis einstellbar ist. Außerdem kann dieses Verhältnis jederzeit reproduziert werden.

Das erfindungsgemäße Verfahren ist für alle Butterarten, wie z.B. Süß-oder Sauerrahmbutter, jeweils gesalzen oder ungesalzen, anwendbar.

Die gestellte Aufgabe bezüglich der Vorrichtung wird durch die im Kennzeichen des Anspruches 3 aufgeführten Merkmale gelöst.

Durch die Zerkleinerungseinrichtung bzw. durch die Zerkleinerungseinrichtungen wird erreicht, daß die mit der Frischbutter zu vermischende Lagerbutter kontinuierlich zugeführt wird, so daß die Voraussetzungen für eine gleichmäßige Verteilung gegeben sind. Da die Zerkleinerungseinrichtung bzw. die Zerkleinerungseinrichtungen dem ersten Abpresser zugeordnet sind, kann man davon ausgehen, daß die Buttermilch bereits abgeführt ist. Es ist besonders vorteilhaft, wenn an dem Abpresser in dem der Zerkleinerungseinrichtung zuzuordnenden Bereich ebenfalls ein Ablaufstutzen für Flüssigkeiten vorgesehen ist. Die Zuordnung der Zerkleinerungseinrichtung bzw. der Zerkleinerungseinrichtungen zum ersten Abpresser ist noch zusätzlich vorteilhaft, da dann die zerkleinerte Lagerbutter auch diejenigen Stufen des Abpressers durchläuft, die auch von der Frischbutter durchlaufen werden. Sofern mehrere Zerkleinerungseinrichtungen vorgesehen sind, können verschiedene Sorten von Lagerbutter mit jeweils unterschiedlicher Qualität zu einem homogenen Endprodukt vermischt werden. Durch die jeder Zerkleinerungseinrichtung zugeordnete Vorschubeinrichtung ist gewährleistet, daß bei einer kontinuierlichen Arbeitsweise ein gleichmäßiger Mengenstrom von zerkleinerter Lagerbutter der Frischbutter zugeführt wird. Um das Mischungsverhältnis variieren zu können, ist es zweckmäßig, wenn zumindest die Vorschubeinrichtung mit einem stufenlos regelbaren Antrieb ausgerüstet ist, da dann die Vorschubgeschwindigkeit entsprechend erhöht oder verringert werden kann.

Zweckmäßigerweise besteht jede Zerkleinerungseinrichtung im wesentlichen aus einer rotierend antreibbaren Trommel, die mit mehreren sich über die gesamte Trommelbreite erstreckenden Messern bestückt ist, deren Schneidkanten gegenüber der Außenfläche der Trommel vorstehen. Diese Ausführung ist konstruktiv besonders einfach, bedingt durch die rotierende Trommel. Außerdem werden von dem kontinuierlich zugeführten Block Butterstückchen in Form von Spänen abgeschält, wodurch die Masse der Butterstückchen zum Zwecke einer gleichmäßigen Verteilung besonders klein ist. Dabei ist es dann besonders vorteilhaft, wenn die Messer im Bereich der schneidenden Kanten zur Bildung von schneidenden Stegen Ausnehmungen aufweisen. Dadurch wird die Breite der abgeschälten Butterstückchen im Verhältnis zur Trommelbreite wesentlich geringer. Ein Aufrollen der abgeschälten Butterstückchen wird begünstigt, wenn der der Schneidkante zugeordnete Bereich der Trommel eine gegenüber der Außenfläche zurückspringende, muldenförmige Vertiefung aufweist.

Die Zuführung von Blöcken zu der Zerkleinerungseinrichtung ist besonders einfach, wenn die Vorschubeinrichtung eine Mulde aufweist. Dabei wird ein kontinuierliches Nachschieben sichergestellt, wenn in dieser Mulde eine antreibbare Förderschnecke vorgesehen ist, deren Drehachse in Längsrichtung der Mulde verläuft. Damit Blöcke unterschiedlicher Größe verarbeitet werden können, ist es zweckmäßig, wenn die Vorschubeinrichtung eine zur Förderschnecke verstellbare Druckschiene für den zu zerkleinernden Block aufweist.

Bei der Mischung von Lagerbutter mit Frischbutter kann es notwendig werden, daß die Frischbutter gekühlt oder erwärmt werden muß. Gleiches gilt für die Lagerbutter, die beispielsweise im gefrorenen Zustand der Vorrichtung zugeführt werden könnte, und somit nach der Zerkleinerung temperiert werden müßte. Dazu ist es zweckmäßig, wenn der Abpresser in dem der Zerkleinerungseinrichtung zugeordneten Bereich und/oder die Zerkleinerungseinrichtung zur Bildung einer Hohlkammer zwei im Abstand zueinander angeordnete Begrenzungswände aufweist. In die Hohlkammer des Abpressers könnte dann beispielsweise Kühl- bzw. Anwärmwasser eingegeben werden. Der Zerkleinerungseinrichtung könnte zusätzlich ein Auftaugerät vorgeschaltet sein.

Weitere Kennzeichen und Merkmale einer vorteilhaften Ausgestaltung der vorliegenden Erfindung sind Gegenstand von weiteren Unteransprüchen und ergeben sich aus der nachfolgenden Beschreibung eines bevorzugten Ausführungsbeispiels.
Es zeigen:

Fig. 1      eine nach dem erfindungsgemäßen Verfahren arbeitende und gestaltete Butterungsmaschine im Aufriß, rein schematisch,

Fig. 2      eine als mit Schneidmessern bestückte Trommel ausgebildete Zerkleinerungseinrichtung in Seitenansicht,

Fig. 3      eine der Fig. 2 entsprechende Stirnansicht,

Fig. 4      einen Schnitt längs der Linie IV-IV in der Fig. 2,

Fig. 5      einen Schnitt längs der Linie V-V in der Fig. 2 und

Fig. 6      die Vorschubeinrichtung im Teilschnitt.

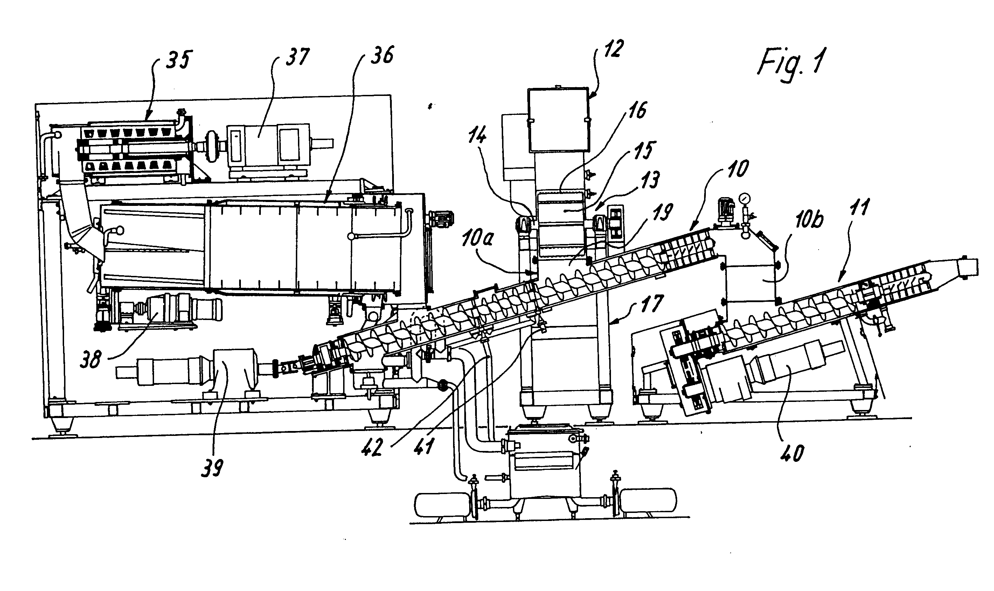

Die in der Fig. 1 aufgezeigte Butterungsmaschine ist mit einem, in Durchlaufrichtung des Butterkorns gesehen, ersten Abpresser 10 und einem zweiten Abpresser 11 ausgerüstet. Das Austragende des ersten Abpressers 10 ist mit dem Zuführende des Abpressers 11 über einen in vertikaler Richtung verlaufenden Zuführschacht 10b verbunden. Demzufolge erfolgt bei der dargestellten Butterungsmaschine das Abpressen in zwei Stufen.

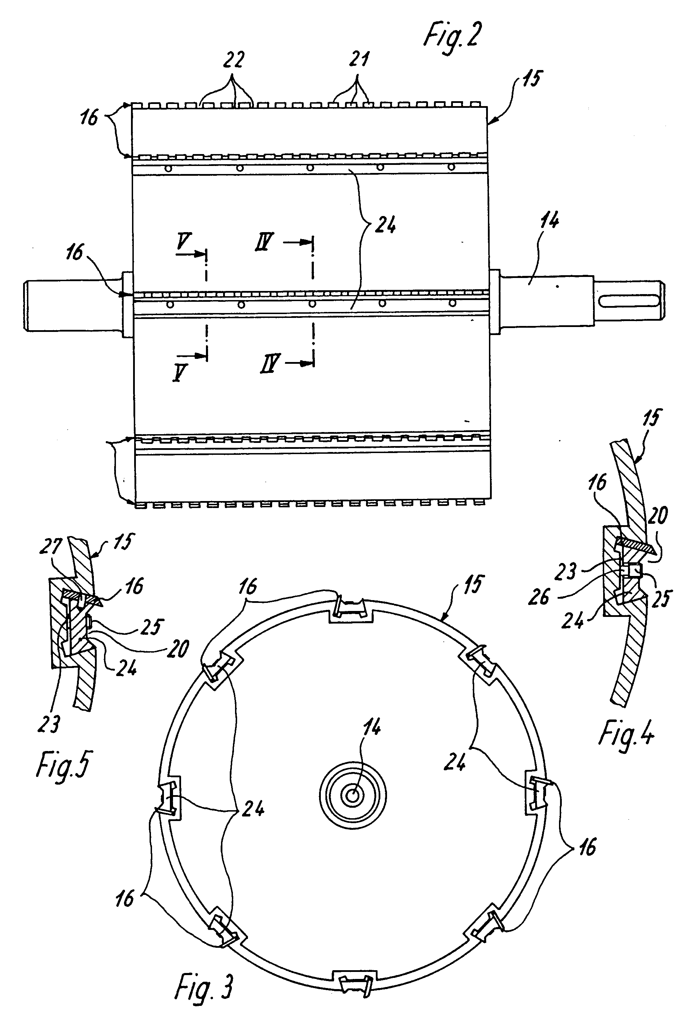

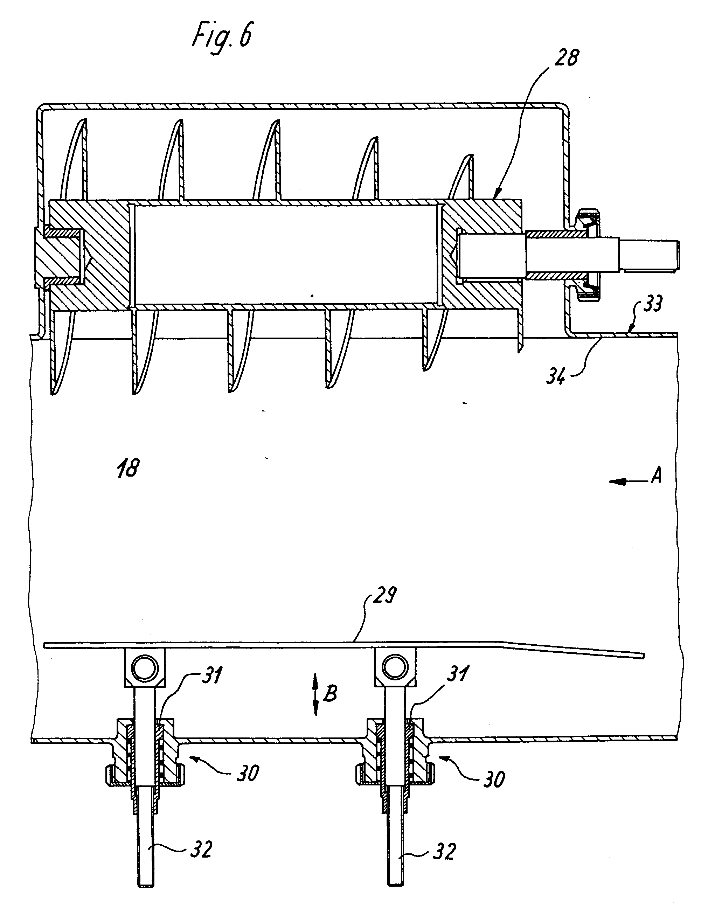

Das Mittelstück des ersten Abpressers 10 weist ein Zwischenstück 10a auf, welches mit den Gehäusewandungen in nicht näher erläuterter Weise verbunden ist. Oberhalb des Zwischenstücks 10a ist eine anhand der Fig. 2 bis 5 noch näher erläuterte Zerkleinerungseinrichtung 13 für einen nicht dargestellten Block aus Lagerbutter oder Reinfett vorgesehen. Die Zerkleinerungseinrichtung 13 weist eine auf einer Horizontalachse 14 drehbar gelagerte Trommel auf, die mit mehreren, sich über die gesamte Breite der Trommel 15 erstreckenden Messern 16 bestückt ist. Die Horizontalachse 14 ist in einem nicht näher erläuterten Gestell 17 gelagert. Die Zerkleinerungseinrichtung 13 wird von einem nicht näher dargestellten Antriebsmotor mit regelbarer Abtriebsdrehzahl angetrieben. Oberhalb der Zerkleinrichtung 13 liegt noch eine anhand der Fig. 6 näher erläuterte Vorschubeinrichtung 18 zum kontinuierlichen Zuführen eines Blockes zu der Zerkleinerungseinrichtung 13.

Wie die Fig. 1 zeigt, liegt die Zerkleinerungseinrichtung 13 in einem relativ geringen Abstand zum ersten Abpresser 10. Bedingt durch die Schräglage des Abpressers 10 liegt aber zwischen der Zerkleinerungseinrichtung 13 und dem Abpresser 10 ein an den vier vertikalen Seiten geschlossener Fallschacht 19, dessen freies Ende in eine Öffnung des Gehäuses des Abpressers 10 einmündet.

Wie die Fig. 2 und 3 zeigen, ist die Trommel 15 im vorliegenden Ausführungsbeispiel mit acht sich über die gesamte Breite erstreckenden, im gleichen Winkelabstand zueinander angeordneten Messern 16 bestückt. Die schneidenden Kanten stehen gegenüber der Außenfläche der Trommel 15 vor. Außerdem stehen die Messer 16 schräg zu den gedachten, diametral verlaufenden Achsen der Trommel 15. Wie die Fig. 2 zeigt, sind die Messer 16 in dem der Schneidkante zugeordneten Bereich zur Bildung von Schneidstegen 21 mit einer Vielzahl von Ausnehmungen 22 versehen. Im vorliegenden Ausführungsbeispiel sind die Schneidstege 21 ein wenig breiter als die Ausnehmungen 22. Die Schneidstege 21 sind bezogen auf die Breite der Trommel 15 relativ schmal. Die Messer 16 stehen schräg zu einer gedachten, an den Trommelumfang angelegten Tangente, wobei die Tangente an dem Angriffspunkt der Messer aus der Trommel gelegt ist. Durch diese Ausbildung der Messer 16 werden relativ schmale, spanartige Butterstückchen von dem Block abgeschält.

Wie die Fig. 3 bis 5 zeigen, liegt jedes Messer 16 in einer sich über die gesamte Breite der Trommel 15 erstreckenden, trapezförmig ausgebildeten Ausnehmung 23, wobei die die Ausnehmung 23 begrenzenden, schräg verlaufenden Wandungen, von der Drehachse 14 aus gesehen, konvergierend zueinander stehen. Zum Festklemmen der Messer 16 sind in die Ausnehmungen 23 im Querschnitt trapezförmig ausgebildete Klemmleisten 24 eingesetzt. Jede Klemmleiste 24 ist mit mehreren, im Abstand zueinander angeordneten Gewindebohrungen versehen, in die ein Gewindestift 25 eingedreht ist. Wie insbesondere die Fig. 4 zeigt, weist jeder Gewindestift 25 an dem der Achse 14 zugewandt liegenden Ende einen im Durchmesser geringer gehaltenen Ansatz 26 auf. Durch die Gewindestifte 25 können die Klemmleisten 24 zum Lösen bzw. Festklemmen der Messer 16 in radialer Richtung bewegt werden.

Bei der Ausführung nach der Fig. 5 sind in die Messer noch rechtwinklig zur Messerebene stehende Führungsstifte 27 eingesetzt.

In der Fig. 6 ist ein bevorzugtes Ausführungsbeispiel einer Vorschubeinrichtung zum Zuführen von Blöcken unterschiedlichen Querschnittes zu der Zerkleinerungseinrichtung 13 dargestellt. Es ist eine Förderschnecke 28 vorgesehen, die von einem nicht dargestellten Antrieb mit regelbarer Abtriebsdrehzahl antreibbar ist. Der nicht dargestellte Block wird in Pfeilrichtung A zugeführt. Wie Fig. 6 zeigt, sind die Außendurchmesser der einlaufseitigen Wendeln der Förderschnecke 28 im Außendurchmesser geringer gehalten als die weiteren Wendeln. Dadurch wird das Einschneiden in den zu transportierenden Block erleichtert. Im Abstand zur Förderschnecke 28 ist eine Druckschiene 29 für den zu zerkleinernden Block vorgesehen, die in Richtung des Pfeiles B verstellbar ist, um den Abstand zur Förderschnecke 28 zu verändern, damit Blöcke unterschiedlichen Querschnittes verarbeitet werden können. Zur Verstellung ist die Druckschiene 29 mit mehreren Stelleinrichtungen 30 ausgerüstet. Jede Stelleinrichtung besteht im wesentlichen aus einer an die Druckschiene 29 angelenkten Stellspindel 32, die mit einer federbelasteten, vedrehbaren Gewindehülse 31 in Eingriff steht. Die Betätigung der federbelasteten Gewindehülse 31 kann manuell oder durch einen Stellmotor erfolgen.

In Transportrichtung A des Blockes gesehen weist die Vorschubeinrichtung vor der Druckschiene 29 eine Zuführwanne 33 auf, die an der der Förderschnecke 28 zugewandten Seite offen ist. Die freien Ränder 34 der Zuführwanne liegen in einem relativ geringen Abstand zur Drehachse der Förderschnecke 28, so daß der zuzuführende Block gegenüber den freien Rändern der Zuführwanne 33 nicht vorsteht.

In nicht dargestellter Weise kann der äußere Mantel der Vorschubeinrichtung doppelwandig ausgebildet sein, d.h. mit zwei im Abstand zueinander liegenden Begrenzungswänden ausgerüstet sein. In diesen Hohlraum könnten Kühl- bzw. Anwärmmedien eingespeist werden, um die Butterstückchen in der für die Verarbeitung günstigsten Temperatur zuzuführen.

Außerdem könnten der Zerkleinerungseinrichtung 13 eine oder mehrere Dosiereinrichtungen für Zuschlagstoffe zugeordnet sein.

In der Fig. 1 sind noch zwei dem ersten Abpresser 10 vorgeschaltete Butterungszylinder mit den Bezugszeichen 35 und 36 versehen. Die Butterungszylinder 35,36 sind jeweils mit einem regelbaren Antriebsmotor 37,38 versehen. Einer der Antriebsmotoren ist als ein Getriebemotor ausgebildet. Auch die Abpresser 10,11 werden von Getriebemotoren 39,40 mit regelbarer Abtriebsdrehzahl angetrieben. Der Butterungszylinder 36 ist mit Abläufen für die anfallende Buttermilch ausgerüstet. Die im ersten Abpresser 10 noch anfallende Buttermilch wird über den Ablaufstutzen 42 abgeführt.

Wie aus der vorangegangenen Beschreibung zu entnehmen ist, sind die Hauptaggregate der Butterungsmaschine mit eigenen, regelbaren Antrieben ausgerüstet. Um das Verhältnis von Butterkorn zu der Menge von Butterstückchen einstellen zu können, werden die Antriebe eine nicht näher erläuterte und nicht dargestellte, vorzugsweise speichprogrammierbare Steuerung gesteuert.

Diese Neuerung ist so ausgelegt, daß unterschiedliche Mischungsverhältnisse jederzeit reproduzierbar sind.

Da Mengenverhältnis von Frischbutter (Butterkornmasse) zu Lagerbutter (Butterstückchen) bzw. zu Reinfett (Fettstückchen) könnte auch mittels eines Rechners erfolgen. In den Rechner werden dann die notwendigen Parameter eingegeben, wodurch ein Wert ermittelt wird, durch den die Geschwindigkeit der Vorschubeinrichtung in Abstimmung mit der zugeführten Frischbuttermenge geregelt wird.

Bezugszeichen

| | |
|---|---|
| 10 | Abpresser I |
| 10a | Zwischenstück |
| 10b | Zuführschacht |
| 11 | Abpresser II |
| 12 | Zuführschacht |
| 13 | Zerkleinerungseinrichtung |
| 14 | Horizontalachse |
| 15 | Trommel |
| 16 | Messer |
| 17 | Gestell |
| 18 | Vorschubeinrichtung |
| 19 | Fallschacht |
| 20 | Mulde oder Rinne |
| 21 | Schneidsteg |
| 22 | Ausnehmung |
| 23 | Ausnehmung |
| 24 | Klemmleiste |
| 25 | Gewindestift |
| 26 | Ansatz |
| 27 | Führungsstift |
| 28 | Förderschnecke |
| 29 | Druckschiene |
| 30 | Stelleinrichtung |
| 31 | Gewindehülse |
| 32 | Stellspindel |
| 33 | Zuführwanne |
| 34 | Rand |
| 35 | Butterungszylinder I |
| 36 | Butterungszylinder II |
| 37 | Antriebsmotor |
| 38 | Getriebemotor |
| 39 | Getriebemotor |
| 40 | Getriebemotor |
| 41 | Ablaufstutzen |
| 42 | Ablaufstutzen |

**Patentansprüche**

1. Verfahren zum Herstellen von Butter mittels einer kontinuierlich arbeitenden Butterungsmaschine, die mindestens einen Butterungszylinder (35,36), einen Buttermilchabzug und einen Abpresser (10,11) aufweist, **dadurch gekennzeichnet,** daß nach dem Abziehen des größten Gehalts an Buttermilch in die verbleibende Butterkornmasse aus einem Block durch mechanische Zerkleinerung gewonnene Butterstückchen oder Fettstückchen eingespeist und in dem Abpresser (10) mit der Butterkornmasse vermischt werden, und daß aus dieser Mischung ein homogener Butterstrang geformt wird.

2. Verfahren nach Anspruch 1, dadurch gekennzeichnet, daß die Zugabe der Butterstückchen bzw. der Fettstückchen in einem regelbaren, kontinuierlichen Mengenstrom erfolgt.

3. Vorrichtung zur Durchführung des Verfahrens nach Anspruch 1, mit einer kontinuierliche arbeitenden Butterungsmaschine, die mindestens einen Butterungszylinder (35,36), einen Buttermilchabzug und einen Abpresser (10,11) aufweist, dadurch gekennzeichnet, daß im Bereich oberhalb des, in Förderrichtung der Butterkornmasse (Frischbutter) gesehen, ersten Abpressers (10) wenigstens eine Zerkleinerungseinrichtung (13) für jeweils einen Butterblock (Lagerbutter) bzw. für einen Fettblock (Reinfett) vorgesehen ist, und daß der Zerkleinerungseinrichtung (13) eine Vorschubeinrichtung (18) für den zu zerkleinernden Block vorgeschaltet ist.

4. Vorrichtung nach Anspruch 3, dadurch gekennzeichnet, daß die Zerkleinerungseinrichtung (13) einen Fallschacht (19) aufweist, dessen freies Ende in einer Öffnung des Gehäuses des Abpressers (10) liegt.

5. Vorrichtung nach Anspruch 3, dadurch gekennzeichnet, daß die Zerkleinerungseinrichtung (13) eine rotierend antreibbare Trommel (15) aufweist, und daß die Trommel (15) mit mehreren, sich über die gesamte Trommelbreite erstreckenden Messern (16) bestückt ist, deren Schneidkanten gegenüber der Außenfläche der Trommel (15) vorstehen.

6. Vorrichtung nach Anspruch 5, dadurch gekennzeichnet, daß die Messer (16) im Bereich der schneidenden Kanten zur Bildung von Schneidstegen (21) Ausnehmungen (22) aufweisen.

**7.** Vorrichtung nach Anspruch 6, dadurch gekennzeichnet, daß die Schneidstege (21), bezogen auf die Breite der Trommel (15), relativ schmal sind.

**8.** Vorrichtung nach Anspruch 5, dadurch gekennzeichnet, daß die Messer (16) schräg zu einer gedachten, an den Trommelumfang angelegten Tangente stehen, wobei die Tangente an den Austrittspunkt der Messer aus der Trommel (15) gelegt ist.

**9.** Vorrichtung nach Anspruch 5, dadurch gekennzeichnet, daß jedem Messer (16) eine gegenüber der Außenfläche der Trommel (15) zurückspringende Mulde oder Rinne (20) zugeordnet ist, die der schneidenden Kante des Messers (16) zugewandt liegt.

**10.** Vorrichtung nach Anspruch 5, dadurch gekennzeichnet, daß die in die Trommel (15) eingesetzten Messer (16) im gleichen Winkelabstand zueinander angeordnet sind.

**11.** Vorrichtung nach Anspruch 5, dadurch gekennzeichnet, daß die Trommel (15) im äußeren Bereich eine der Stückzahl der eingesetzten Messer (16) entsprechende Anzahl von im Querschnitt trapezförmig gestalteten Ausnehmungen (23) aufweist, in die jeweils eine, ebenfalls im Querschnitt trapezförmig gestaltete, in radialer Richtung bewegbare Klemmleiste (24) eingesetzt ist.

**12.** Vorrichtung nach Anspruch 11, dadurch gekennzeichnet, daß die Klemmleiste (24) an der äußeren, freien Seite eine sich über die gesamte Länge erstreckende Mulde oder Rinne (20) aufweist.

**13.** Vorrichtung nach Anspruch 11, dadurch gekennzeichnet, daß die die Ausnehmungen (23) begrenzenden, schräg zueinander verlaufenden Wandungen - von der Horizontalachse (14) der Trommel (15) aus gesehen - konvergierend zueinander stehen.

**14.** Vorrichtung nach Anspruch 3, dadurch gekennzeichnet, daß die Vorschubeinrichtung (18) eine Mulde und eine antreibbare Förderschnecke (28) aufweist, daß die Drehachse der Förderschnecke (28) in Längsrichtung der Vorschubeinrichtung (18) verläuft, und daß im Abstand zur Förderschnecke (28) eine gegenüber der Förderschnecke (28) verstellbare Druckschiene (29) für den zu zerkleinernden Block vorgesehen ist.

**15.** Vorrichtung nach Anspruch 14, dadurch gekennzeichnet, daß die Förderschnecke von einem Antrieb mit regelbarer Abtriebsdrehzahl antreibbar ist.

**16.** Vorrichtung nach Anspruch 14, dadurch gekennzeichnet, daß die Druckschiene (29) mindestens eine Stelleinrichtung (30) aufweist.

**17.** Vorrichtung nach Anspruch 16, dadurch gekennzeichnet, daß jede Stelleinrichtung (30) im wesentlichen aus einem Spindeltrieb (31,32) gebildet ist.

**18.** Vorrichtung nach Anspruch 14, dadurch gekennzeichnet, daß der Außendurchmesser der einlaufseitigen Wendeln der Förderschnecke (28) kleiner ist als der Durchmesser der auslaufseitigen Wendeln.

**19.** Vorrichtung nach einem der Ansprüche 3 bis 18, dadurch gekennzeichnet, daß der erste Abpresser (10), in dem der Zerkleinerungseinrichtung (13) zugeordneten Bereich einen Ablaufstutzen (41) für abzuführende Flüssigkeit aufweist.

**20.** Vorrichtung nach einem der Ansprüche 3 bis 19, dadurch gekennzeichnet, daß der Abpresser (10) in dem der Zerkleinerungseinrichtung (13) zugeordneten Bereich und/oder die Zerkleinerungseinrichtung (13) zur Bildung einer Hohlkammer zwei im Abstand zueinander angeordnete Begrenzungswände aufweist, und daß diese Hohlkammern mit einem Kühloder Heizmittel, vorzugsweise mit Kühl- oder Anwärmwasser beaufschlagbar sind.

**21.** Vorrichtung nach einem der Ansprüche 3 bis 20, dadurch gekennzeichnet, daß der Zerkleinerungseinrichtung (13) ein oder mehrere Zuführkanäle für Zuschlagstoffe zugeordnet sind.

**22.** Vorrichtung nach einem der Ansprüche 3 bis 21, dadurch gekennzeichnet, daß die Abtriebsdrehzahlen der Antriebe der Butterungsmaschine und die Abtriebsdrehzahl des Antriebes der Rahmpumpe unabhängig voneinander regelbar sind, und daß die Regelung durch eine Steuerung, vorzugsweise durch eine speicherprogrammierbare Steuerung erfolgt.

**23.** Vorrichtung nach einem der Ansprüche 3 bis 22, dadurch gekennzeichnet, daß dem ersten Abpresser (10) mehrere Zerkleinerungseinrichtungen für jeweils einen Butterblock bzw. für einen Fettblock zugeordnet sind.

**24.** Vorrichtung nach Anspruch 23, dadurch gekennzeichnet, daß das Mischungsverhältnis von Frischbutter (Butterkornmasse) zu Lagerbutter (Butterstückchen) bzw. zu Reinfett (Fettstückchen) durch Eingabe der dazu notwendigen Paramter in einen Rechner veränderbar ist, wobei der vom Rechner ermittelte Wert die Geschwindigkeit der Vorschubeinrichtung in Abstimmung auf die zugeführte Frischbuttermenge beeinflußt.

## Claims

**1.** A process for the production of butter by means of a continuously operating butter-making machine which has at least one butter-making cylinder (35, 36), a buttermilk take-off means and a pressing device (10, 11), characterised in that after the major content of buttermilk has been taken off, pieces of butter or pieces of fat which are obtained from a block by being mechanically broken up are fed into the remaining butter grain mass and mixed with the butter grain mass in the pressing device (10), and that a homogeneous line of butter is formed from that mixture.

**2.** A process according to claim 1 characterised in that the addition of the pieces of butter or pieces of fat is effected in a controllable continuous quantitative flow.

**3.** Apparatus for carrying out the process according to claim 1 comprising a continuously operating butter-making machine which has at least one butter-making cylinder (35, 36), a buttermilk takeoff means and a pressing device (10, 11), characterised in that provided in the region above the pressing device (10) which is first as viewed in the direction of conveying movement of the butter grain mass (fresh butter) is at least one breaking-up device (13) for a respective block of butter (stock butter) or for a block of fat (pure fat), and that disposed upstream of the breaking-up device (13) is a feed device (18) for the block which is to be broken up.

**4.** Apparatus according to claim 3 characterised in that the breaking-up device (13) has a drop shaft (19) whose free end lies in an opening in the housing of the pressing device (10).

**5.** Apparatus according to claim 3 characterised in that the breaking-up device (13) has a drum (15) which can be driven in rotation and that the drum (15) is provided with a plurality of blades (16) which extend over the entire drum width and the cutting edges of which project with respect to the outside surface of the drum (15).

**6.** Apparatus according to claim 5 characterised in that the blades (16) have recesses (22) in the region of the cutting edges to form cutting bar portions (21).

**7.** Apparatus according to claim 6 characterised in that the cutting bar portions (21) are relatively narrow with respect to the width of the drum (15).

**8.** Apparatus according to claim 5 characterised in that the blades (16) are disposed inclinedly relative to a notional tangent to the periphery of the drum, wherein the tangent is at the point at which the blades come out of the drum (15).

**9.** Apparatus according to claim 5 characterised in that associated with each blade (16) is a trough or channel (20) which is set back with respect to the outside surface of the drum (15) and which faces towards the cutting edge of the blade (16).

**10.** Apparatus according to claim 5 characterised in that the blades (16) which are fitted into the drum (15) are arranged at the same angular spacing relative to each other.

**11.** Apparatus according to claim 5 characterised in that in the outer region the drum (15) has a number, which corresponds to the number of inserted blades (16), of recesses (23) which are of a trapezoidal configuration in cross-section and into each of which is inserted a respective clamping bar (24) which is also of trapezoidal configuration in cross-section and which is movable in the radial direction.

**12.** Apparatus according to claim 11 characterised in that at the outer free side the clamping bar (24) has a trough or channel (20) extending over the entire length.

**13.** Apparatus according to claim 11 characterised in that the walls which define the recesses (23) and which extend inclinedly relative to each other are disposed in such a way as to converge towards each other, as viewed from the horizontal axis (14) of the drum (15).

**14.** Apparatus according to claim 3 characterised in that the feed device (18) has a trough and a drivable conveyor screw (28), that the axis of rotation of the conveyor screw (28) extends in the longitudinal direction of the feed device (18), and that provided at a spacing relative to the conveyor screw (28) is a pressure strip (29) for the block which is to be broken up, the pressure strip being adjustable with respect to the conveyor screw (28).

15. Apparatus according to claim 14 characterised in that the conveyor screw is drivable by a drive with a controllable drive speed of rotation.

16. Apparatus according to claim 14 characterised in that the pressure strip (29) has at least one control means (30).

17. Apparatus according to claim 16 characterised in that each control means (30) is essentially formed from a spindle drive (31, 32).

18. Apparatus according to claim 14 characterised in that the outside diameter of the turns of the conveyor screw (28) at the entry end is smaller than-the diameter of the turns at the exit end.

19. Apparatus according to one of claims 3 to 18 characterised in that the first pressing device (10), in the region associated with the breaking-up device (13), has a drain connection (41) for liquid to be carried away.

20. Apparatus according to one of claims 3 to 19 characterised in that the pressing device (10), in the region associated with the breaking-up device (13), and/or the breaking-up device (13) has two boundary walls which are disposed at a spacing relative to each other, to form a hollow chamber, and that said hollow chambers can be supplied with a cooling or heating agent, preferably with cooling or warming water.

21. Apparatus according to one of claims 3 to 20 characterised in that one or more feed ducts for additive substances are associated with the breaking-up device (13).

22. Apparatus according to one of claims 3 to 21 characterised in that the drive speeds of the drives of the butter-making machine and the drive speed of the drive of the cream pump are controllable independently of each other and that the control action is produced by a control means, preferably by a memory-programmable control means.

23. Apparatus according to one of claims 3 to 22 characterised in that a plurality of breaking-up devices for respective blocks of butter and blocks of fat are associated with the first pressing device (10).

24. Apparatus according to claim 23 characterised in that the ratio of mixing of fresh butter (butter grain mass) to stock butter (pieces of butter) or pure fat (pieces of fat) is variable by input of the parameters required for that purpose into a computer, wherein the value ascertained by the computer influences the speed of the feed device to match it to the amount of fresh butter supplied.

## Revendications

1. Procédé de fabrication du beurre au moyen d'une baratte fonctionnant en continu, qui comporte au moins un cylindre de baratte (35, 36), une extraction du babeurre et un pressoir (10, 11), caractérisé en ce qu'après extraction de la plus grande partie du babeurre, il est introduit dans la masse granuleuse de beurre restante et mélangé dans le pressoir (10), à la masse granuleuse de beurre, des morceaux de beurre ou de graisse obtenus par fragmentation mécanique d'un bloc et en ce qu'il est formé un pain de beurre homogène, à partir de ce mélange.

2. Procédé selon la revendication 1, caractérisé en ce que l'addition des morceaux de beurre ou de graisse s'effectue en un flux massique régulier et continu.

3. Dispositif pour la mise en oeuvre du procédé selon la revendication 1, comportant une baratte fonctionnant en continu qui comporte au moins un cylindre de baratte (35, 36), une extraction du babeurre et un pressoir (10, 11), caractérisé en ce que dans la zone située audessus du premier pressoir (10), vu dans le sens du transport de la masse granuleuse de beurre (beurre frais), il est prévu au moins un dispositif de fragmentation (13) pour un bloc de beurre (beurre de stockage) ou pour un bloc de graisse (graisse pure) et en ce qu'il est monté, en amont du dispositif de fragmentation (13), un dispositif d'avance (18) pour le bloc à fragmenter.

4. Dispositif selon la revendication 3, caractérisé en ce que le dispositif de fragmentation (13) comporte une trappe (19) dont l'extrémité libre se situe dans une ouverture du carter du pressoir (10).

5. Dispositif selon la revendication 3, caractérisé en ce que le dispositif de fragmentation (13) comporte un tambour (15) tournant et en ce que le tambour (15) est équipé de plusieurs lames (16) s'étendant sur toute la largeur du tambour, dont les arêtes de coupe font saillie par rapport à la surface extérieure du tambour (15).

6. Dispositif selon la revendication 5, caractérisé en ce que les lames (16) comportent des évidements (22) dans la région des arêtes coupantes, afin de former des dents de coupe.

7. Dispositif selon la revendication 6, caractérisé en ce que les dents de coupe (21) sont relativement étroites par rapport à la largeur du tambour (15).

8. Dispositif selon la revendication 5, caractérisé en ce que les lames (16) sont obliques par rapport à une tangente imaginaire à la périphérie du tambour, la tangente passant par le point de sortie des lames, du tambour (15).

9. Dispositif selon la revendication 5, caractérisé en ce qu'il est associé à chaque lame (16) une auge ou une rigole (20), en retrait par rapport à la surface extérieure du tambour (15), laquelle est tournée vers l'arête coupante de la lame (16).

10. Dispositif selon la revendication 5, caractérisé en ce que les lames (16) montées dans le tambour (15), ont entre elles le même écartement angulaire.

11. Dispositif selon la revendication 5, caractérisé en ce que le tambour (15) comporte, dans sa zone extérieure, un nombre d'évidements (23) de section transversale trapézoïdale, correspondant au nombre des lames (16) montées à l'intérieur, dans chacun desquels est insérée une baguette de serrage (24), également de section transversale trapézoïdale, déplaçable radialement.

12. Dispositif selon la revendication 11, caractérisé en ce que la baguette de serrage (24) présente, sur le côté libre, extérieur, une auge ou rigole (20) s'étendant sur toute sa longueur.

13. Dispositif selon la revendication 11, caractérisé en ce que les parois, limitant les évidements (23), s'étendant obliquement les unes par rapport aux autres, convergent l'une vers l'autre, vues à partir de l'axe horizontal (14) du tambour (15).

14. Dispositif selon la revendication 3, caractérisé en ce que le dispositif d'avance (18) présente une auge et une vis de transport (28) entrainée, en ce que l'axe de rotation de la vis de transport (28) s'étend dans la direction longitudinale du dispositif d'avance (18) et en ce qu'à une certaine distance de la vis de transport (28), il est prévu un rail de pression (29) réglable par rapport à la vis de transport (28), pour le bloc à fragmenter.

15. Dispositif selon la revendication 14, caractérisé en ce que la vis de transport peut être entraînée par un mécanisme d'entraînement à vitesse de sortie réglable.

16. Dispositif selon la revendication 14, caractérisé en ce que le rail de pression (29) comporte au moins un dispositif de réglage (30).

17. Dispositif selon la revendication 16, caractérisé en ce que chaque dispositif de réglage (30) est essentiellement formé par un mécanisme à broche (31, 32).

18. Dispositif selon la revendication 14, caractérisé en ce que le diamètre extérieur des spires, côté entrée de la vis de transport (28), est inférieur au diamètre des spires côté sortie.

19. Dispositif selon l'une des revendications 3 à 18, caractérisé en ce que le premier pressoir (10) comporte, dans la zone associée au dispositif de fragmentation (13), une tubulure de sortie (41) pour le liquide à évacuer.

20. Dispositif selon l'une des revendications 3 à 19, caractérisé en ce que le pressoir (10) comporte, dans la zone associée au dispositif de fragmentation (13) et/ou le dispositif de fragmentation (13) comporte des parois de délimitation espacées l'une de l'autre, pour former une chambre creuse et en ce que ces chambres creuses peuvent recevoir un fluide de refroidissement ou de chauffage, de préférence de l'eau de refroidissement ou de chauffage.

21. Dispositif selon l'une des revendications 3 à 20, caractérisé en ce qu'un ou plusieurs canaux d'alimentation pour des additifs sont associés au dispositif de fragmentation (13).

22. Dispositif selon l'une des revendications 3 à 21, caractérisé en ce que les vitesses de sortie des mécanismes d'entraînement de la baratte et la vitesse de sortie du mécanisme d'entraînement de la pompe à crème sont réglables indépendamment les unes des autres et en ce que le réglage s'effectue par un dispositif de commande, de préférence par un automate programmable.

23. Dispositif selon l'une des revendications 3 à 22, caractérisé en ce qu'au premier pressoir (10) sont associés plusieurs dispositifs de fragmentation, chacun pour un bloc de beurre ou pour un bloc de graisse.

24. Dispositif selon la revendication 23, caractérisé en ce que le rapport du mélange entre le beurre frais (masse granuleuse de beurre) et le beurre de stockage (morceaux de beurre) ou de la graisse pure (morceaux de graisse) peut être modifié par introduction des paramètres nécessaires à cet effet, dans un calculateur, la valeur déterminée par le calculateur influençant la vitesse d'avance en fonction de la quantité de beurre frais alimenté.

Fig. 1

EP 0 279 923 B1

Fig.2

Fig.5

Fig. 3

Fig.4

*Fig.6*